# EUROPÄISCHE PATENTSCHRIFT

(11) **EP 1 173 053 B1**
(45) Veröffentlichungstag und Bekanntmachung des Hinweises auf die Patenterteilung: **20.08.2003**
(21) Anmeldenummer: 00934919.2
(22) Anmeldetag: 20.04.2000
(51) Int. Cl.: A01G 9/02, A47G 7/04

(54) **PFLANZVORRICHTUNG MIT HALTERUNG**
PLANTER COMPRISING A SUPPORT
JARDINIERE AVEC SUPPORT

(30) Priorität: 23.04.1999 DE 19918418
(43) Veröffentlichungstag der Anmeldung: 23.01.2002
(73) Patentinhaber: Müller, Siegfried, 31275 Lehrte (DE)
(72) Erfinder: Müller, Siegfried, 31275 Lehrte (DE)
(74) Vertreter: Patentanwälte Thömen & Körner
(86) Internationale Anmeldenummer: DE0001256
(87) Internationale Veröffentlichungsnummer: WO00064239

(56) Entgegenhaltungen:
- EP-A- 0 334 770
- EP-A- 0 846 413
- GB-A- 2 154 858

## Beschreibung

Die Erfindung betrifft eine Pflanzvorrichtung gemäß dem Oberbegriff des Patentanspruchs 1.

Eine derartige Pflanzvorrichtung mit einem nach oben offenen Pflanzbehälter, in welchen ein als Korb ausgebildeter Einsatz eingesetzt ist, wobei die Pflanzvorrichtung eine Halterung aufweist, welche mit einem Ende an der Pflanzvorrichtung und mit einem anderen Ende an einem Befestigungsort anbringbar ist, ist aus der EP 0 846 413 A2 bekannt. Die Pflanzvorrichtung hat sich, insbesondere wenn sie als Balkonblumenkasten verwendet wird, bestens bewährt, da zum einen der Wasserhaushalt für die Pflanzen durch die spezielle Ausgestaltung dieser Pflanzvorrichtung optimal gesteuert werden kann, und zum anderen, da durch den korbförmigen herausnehmbaren Einsatz die Pflanzen im Bedarfsfalle, beispielsweise zu Überwinterungszwecken, leicht aus dem nach oben offenen Pflanzbehälter entnommen werden kann, ohne daß die gesamte Pflanzvorrichtung vom Anbringungsort, beispielsweise einem Balkongeländer oder dergleichen, abmontiert werden müßte.

Die für diese Pflanzvorrichtung bislang verwendete Halterung weist jedoch noch einige Nachteile auf. Die in der EP 0 846 413 A2 beschriebene Halterung weist einen Aufhängehaken mit einem nach oben gebogenen Ende auf, welches in eine Öffnung der Bodenwandung des Pflanzbehälters eingreift. Der Aufhängehaken umgreift dabei die Bodenwandung und eine Seitenwandung der Pflanzvorrichtung, so daß die Pflanzvorrichtung im aufgehängten Zustand auf dem Aufhängehaken aufliegt. Mit einem anderen Ende, welches ebenfalls abgewinkelt ist, wird der Haken beispielsweise an den Handlauf eines Geländers eines Balkons eingehängt. Ein derartiger Aufhängehaken entspricht weitgehend den üblichen für Pflanzvorrichtungen verwendeten Aufhängehaken. Diese Aufhängehaken weisen alle gewisse Nachteile auf.

Insbesondere kann die Stabilität der Aufhängung ungenügend sein. Bei Sturm kann die Pflanzvorrichtung durch seitliche Windkräfte hin und her geweht werden, was im Extremfall dazu führt, daß die Pflanzvorrichtung von der Halterung abrutscht und herunter fällt. Nachteilig ist ferner, daß sich die üblichen Halterungen nur schwer oder gar nicht bezüglich des Winkels zum Aufhängungsort einstellen lassen. Zudem ist das zur Befestigung mit dem Aufhängungsort vorgesehene Ende der Halterung meist nur in einer genormten Ausformung erhältlich, entsprechend den genormten Balkonhandläufen.

Werden die bekannten Pflanzvorrichtungen als Balkonkästen zudem an Balkonen von Hochhäusern montiert, wirken die an der Unterseite der Pflanzvorrichtungen angebrachten Halterungen für den auf der Straße stehenden Betrachter optisch nicht befriedigend, da sie den optischen Gesamtcharakter derartiger Pflanzvorrichtungen nachteilig beeinflussen, insbesondere wenn die meist aus Stahl bestehenden Halterungen nach einer gewissen Zeit Spuren von Korrosion zeigen.

Werden die bekannten Pflanzvorrichtungen mehr oder weniger ebenerdig in öffentlichen Anlagen aufgestellt bzw. aufgehängt, muß zudem gewährleistet sein, daß ein hinreichend sicherer Schutz gegen Diebstahl gegeben ist. Die üblichen Halterungen können hier nicht befriedigen, da sie sich nur schwer diebstahlsicher ausgestalten lassen.

Aufgabe der Erfindung ist es daher, eine Pflanzvorrichtung der eingangs geschilderten Art dahingehend zu verbessern, daß deren Halterung mechanisch stabil, sturmsicher und diebstahlsicher ausgebildet ist, und welche den optischen Gesamteindruck der Pflanzvorrichtung nicht beeinträchtigt.

Diese Aufgabe wird mit einer Pflanzvorrichtung der eingangs geschilderten Art gelöst, welche die Merkmale des kennzeichnenden Teils des Patentanspruchs 1 aufweist. Die Pflanzvorrichtung weist eine Halterung auf, die aus zwei an zwei sich gegenüberliegenden Seitenwandungen der Pflanzvorrichtung anbringbaren Halterarmen besteht, wobei jeder Halterarm an einem unteren Bereich des Halterarms wenigstens zwei Löcher aufweist, in welche an der Innenwandung angebrachte Bolzen eingreifen, wobei der Halterarm im Eingriffszustand mit dem Bolzen lateral durch die Innenwandung der Seitenwandung des Pflanzbehälters und durch eine Außenwandung einer Seitenwandung des Korbes festgelegt ist, und daß ein oberer Bereich des Halterarms den Pflanzbehälter und den Korb überragt und mit einem Befestigungsflansch zur Befestigung am Befestigungsort versehen ist, wobei bei waagerechter Ausrichtung der Pflanzvorrichtung der Winkel zwischen Befestigungsflansch und Befestigungsort einstellbar ist.

Auf überraschend einfache Weise wird die Aufgabe also dadurch gelöst, daß hier zwei Halterarme innen an Seitenwandungen des Pflanzbehälters angebracht sind, und daß der Winkel des Halterarmes bzw. des Befestigungsflansches zum Befestigungsort einstellbar ist.

Eine derartige Ausgestaltung ermöglicht eine mechanisch stabile Befestigung der Pflanzvorrichtung am Befestigungsort bzw. eine mechanisch stabile Befestigung der Halterung an der Pflanzvorrichtung. Da die Halterung lateral durch die Seitenwände des Pflanzbehälters bzw. des Korbes begrenzt bzw. festgelegt ist, können auch seitlich auftretende mechanische Kräfte, beispielsweise durch Wind, sicher abgefangen werden. Auch bezüglich des Diebstahlschutzes bietet die erfindungsgemäße Lösung Vorteile. Durch die Innenbefestigung der Halterarme können Unbefugte nicht ohne weiteres an die Befestigungspunkte der Halterarme mit der Pflanzvorrichtung gelangen, da diese Befestigungspunkte durch den Korb abgedeckt sind, wobei sich der Korb auf einfache Weise mit dem Pflanzbehälter verbinden läßt, so daß dieser Korb nicht ohne weiteres aus dem Pflanzbehälter entfernbar ist.

Da nur ein geringer Teil der Halterung sichtbar ist, stört diese Halterung den optischen Eindruck nicht mehr. Bei Betrachtung der Pflanzvorrichtung von unten bzw. schräg unten ist die Halterung nicht mehr wahrnehmbar. Die Halterung ist in die optische Gesamtkomposition eingebunden und fügt sich in diese organisch ein und wirkt nicht mehr wie ein Fremdkörper.

Dadurch, daß sich der Winkel der Halterung zum Befestigungsort frei einstellen läßt, läßt sich die erfindungsgemäße Pflanzvorrichtung auch an Orten anbringen, wo dies bislang nur schwer möglich war, beispielsweise senkrecht unter einem Gebäudevorsprung, einem Tankstellendach oder dergleichen.

In praktischen Ausgestaltungen der Erfindung ist vorgesehen, daß die beiden Bolzen in einer Linie parallel zur Fläche der Bodenwandung des Korbes an der Seitenwandung des Pflanzbehälters angeordnet sind; daß eine Mehrzahl von Löchern im unteren Bereich des Halterarms in einem Kreisbogen zueinander angeordnet sind, wobei ein Bolzen in Eingriff mit jeweils einem Loch des Kreisbogens bringbar ist, während ein zweiter Bolzen in Eingriff mit einem sich außerhalb des Kreisbogens befindlichen Loch bringbar ist, wobei der lineare Abstand zwischen jedem Loch des Kreisbogens zu dem außerhalb des Kreisbogens angeordneten Loch gleich ist.

Bei dieser Ausgestaltung wird zur Anbringung des unteren Bereiches des Halterarms das einzelne Loch über einen Bolzen gebracht. Dieser Bolzen dient dann als Achse, um die herum der Halterarm in einem gewünschten Einstellwinkel gedreht wird, bis das für den Winkel passende Loch im Kreisbogen über den zweiten Bolzen geführt werden kann.

In einer weiteren praktischen Ausgestaltung der Erfindung ist vorgesehen, daß der Halterarm ein Flachstück ist, bei dem ein den Befestigungsflansch bildendes oberes Ende abgewinkelt ist. Weiter ist vorgesehen, daß der Befestigungsflansch mit einem Langloch versehen ist. Insbesondere das Langloch kann dann genutzt werden, den Anschlußflansch direkt an dem Befestigungsort anzuschrauben, wobei das Langloch dann zu Ausrichtung der Pflanzvorrichtung dient. Soll die Pflanzvorrichtung beispielsweise an den Handlauf eines Balkongeländers angebracht werden, können entweder genormte Teile verwendet werden, um eine Befestigung des Anschlußflansches über diese Normteile mit dem Handlauf zu ermöglichen, oder es kann beispielsweise ein einfaches Lochband verwendet werden, das um den Handlauf herumgewickelt und mit dem Anschlußflansch verknebelt wird.

In vorteilhaften Weiterbildungen der Erfindung ist vorgesehen, daß der Bolzen eine einstückig durch eine federnde Zunge mit der Innenwandung des Pflanzbehälters verbundene Klinke ist, bzw. in alternativen Ausgestaltungen der Erfindung, daß der Bolzen aus Kunststoff besteht und an die Innenwandung angespritzt ist, oder daß der Bolzen federnd an der Seitenwandung gelagert ist. Ferner kann vorgesehen sein, daß der Bolzen ein Schraubbolzen ist.

In einer weiteren Ausgestaltungsform kann vorgesehen sein, daß ein Loch des Halterarms ein kurvenförmig ausgebildetes Langloch ist. Im Zusammenspiel mit einem Schraubbolzen mit Mutter, kann dieses kurvenförmig ausgebildete Langloch zu einer stufenlosen Winkeleinstellung des Halterarms auf einfachste Art und Weise genutzt werden.

In weiteren praktischen Ausgestaltungen der Erfindung ist vorgesehen, daß der Befestigungsflansch wenigstens eine Sollknickstelle zur weiteren Abwinklung wenigstens eines Teilbereichs des Befestigungsflansches aufweist; daß der Befestigungsflansch mit einem Schlitz versehen ist; daß der Halterarm mit einem Haltersattelstück verbindbar ist, wobei das Haltersattelstück ein zu einem U-Stück abwinkelbares Winkelstück sein kann, wobei ferner vorgesehen sein kann, daß das Winkelstück wenigstens eine Sollknickstelle aufweist, durch welche das Winkelstück zum U-Stück abwinkelbar ist, und wobei ferner vorgesehen sein kann, daß das Winkelstück an wenigstens einem Ende mit einem Knebel versehen ist, wobei der Knebel mit dem Befestigungsflansch verbindbar ist.

Weitere Vorteile und Ausgestaltungen der Erfindung werden in der Beschreibung, den Patentansprüchen und der Zeichnung näher erläutert. In der Zeichnung zeigen:
- Fig. 1: ein Ausführungsbeispiel einer Pflanzvorrichtung in perspektivischer Darstellung,
- Fig. 2: die Pflanzvorrichtung aus Fig. 1 im Längsschnitt,
- Fig. 3: eine Detailansicht einer Pflanzvorrichtung im Längsschnitt,
- Fig. 4: ein erstes Ausführungsbeispiel eines Halterarmes der erfindungsgemäßen Pflanzvorrichtung von der Seite,
- Fig. 5: ein zweites Ausführungsbeispiel eines Halterarmes der erfindungsgemäßen Pflanzvorrichtung von der Seite,
- Fig. 6: ein drittes Ausführungsbeispiel eines Halterarmes der erfindungsgemäßen Pflanzvorrichtung von der Seite,
- Fig. 7: den Halterarm aus Fig. 6 von oben,
- Fig. 8: ein Haltersattelstück der Pflanzvorrichtung in perspektivischer Darstellung, und
- Fig. 9: ein Ausführungsbeispiel einer an einer Mauer befestigten Pflanzvorrichtung von der Seite.

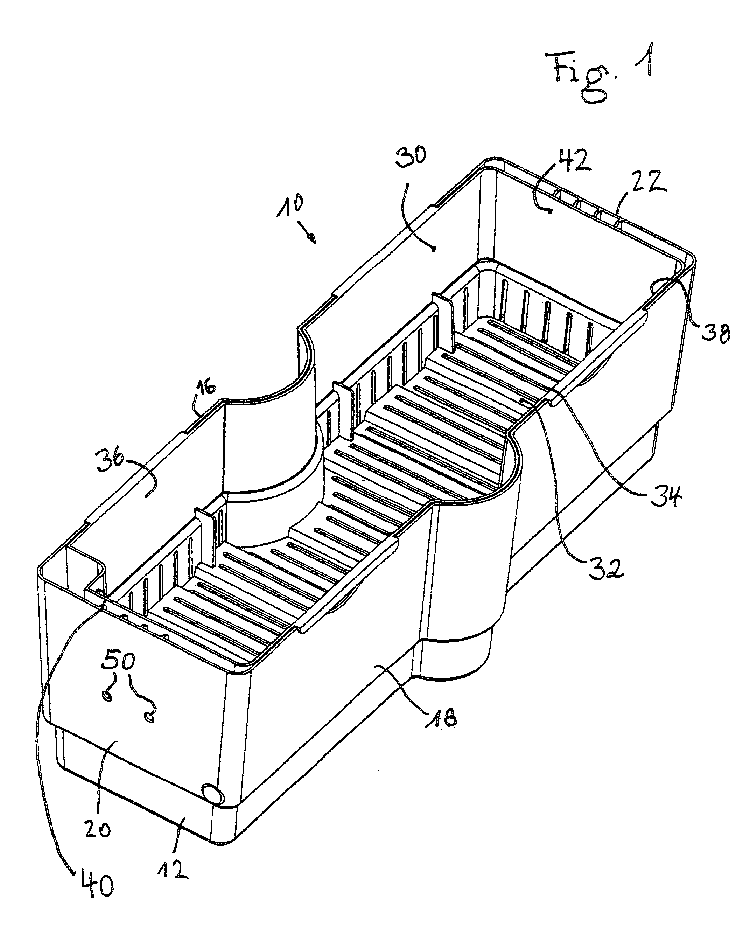

In Fig. 1 ist in perspektivischer Ansicht ein Auführungsbeispiel einer Pflanzvorrichtung 10 dargestellt. Diese besteht aus einem Pflanzbehälter 12 mit Bodenwandung 14, welche in Fig. 1 nicht sichtbar ist, mit vorderen und hinteren Seitenwandungen 16, 18, wobei diese Seitenwandungen 16, 18 durch schmalere Seitenwandungen 20, 22 verbunden sind. In den Pflanzbehälter 12 ist ein als Korb 30 ausgebildeter Einsatz eingesetzt. Der Korb 30 weist eine Bodenwandung 32 mit Öffnungen 34 sowie Seitenwandungen 36 - 42 auf.

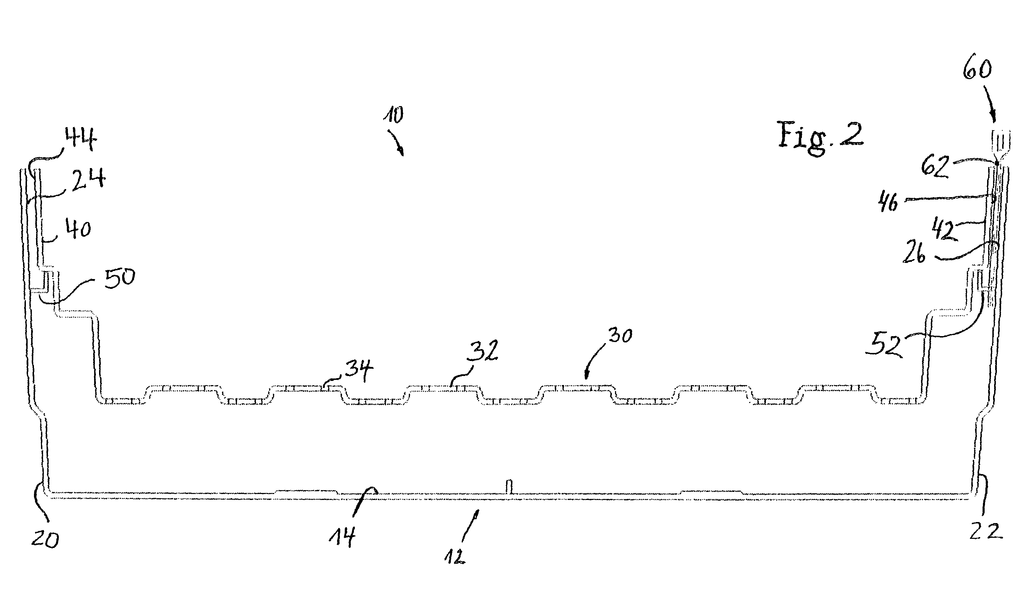

Wie in Fig. 2 zu erkennen ist, ist die mit Öffnungen 34 versehene Bodenwandung 32 mit einem Abstand zur Bodenwandung 14 des Pflanzbehälters 12 angeordnet, wodurch eine Kammer zur Aufnahme von Wasser gebildet ist.

Die Seitenwandungen 36 - 42 des Korbes 30 sind dagegen relativ eng zu den Seitenwandungen 16 - 22 der Pflanzvorrichtung 10 beabstandet. Die Seitenwandungen 20, 22 des Pflanzbehälters 12 sind mit Bolzen 50, 52 versehen, welche der Verbindung mit einer Halterung 60 dienen.

Diese Halterung 60 wird anhand der Fig. 2 - 5 näher beschrieben.

In Fig. 2 ist die Pflanzvorrichtung 10 aus Fig. 1 im Längsschnitt dargestellt, wobei in Fig. 2 schematisch ein Halterarm 62 dargestellt ist. Die Halterung 60 wird durch wenigstens zwei dieser Halterarme 62 gebildet, die mit dem Bolzen 50, 52 verbunden werden.

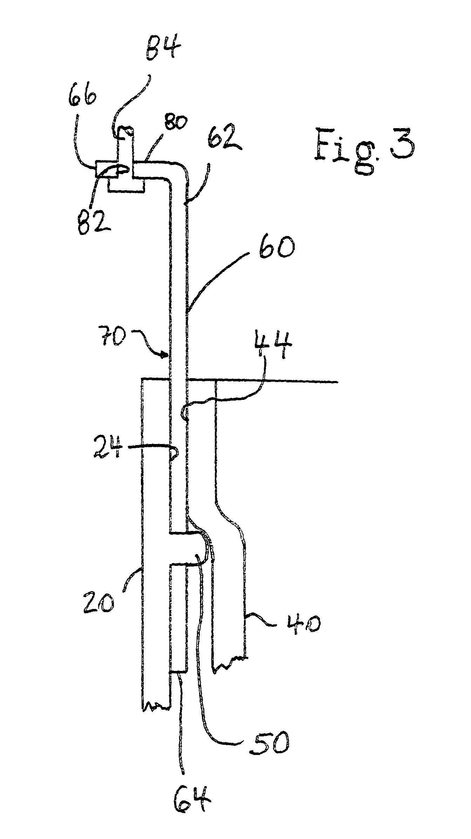

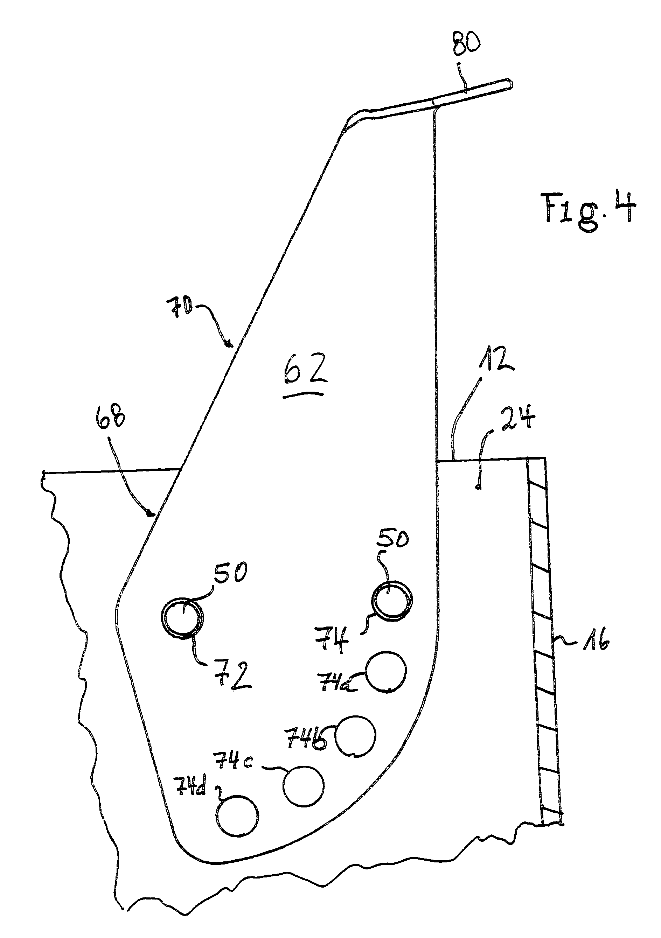

Ein erstes Ausführungsbeispiel eines Halterarmes 62 ist in den Fig. 3 und 4 im Längsschnitt und von der Seite dargestellt. Der Halterarm 62 dient dazu, mit einem Ende 64 an der Pflanzvorrichtung 10 und mit einem anderen Ende 66 an einem nicht näher dargestellten Befestigungsort verbunden zu werden. Dazu ist der Halterarm 62 an einer der Innenwandungen 24, 26 der Seitenwandung 20, 22 des Pflanzbehälters 12 angelegt, wobei Bolzen 50, 52 durch Löcher 72 und 74 geführt sind.

Zur Befestigung des Halterarms 62 wird dieser einfach auf die Bolzen 50 aufgesteckt; anschließend wird der Korb 30 in den Pflanzbehälter 12 eingesetzt, wodurch die Außenwandung 44, 46 der Seitenwandung 40, 42 des Korbes 30 den Halterarm 62 gegen eine laterale Verschiebung sichert.

Ein oberer Bereich 70 des Halterarmes 62 ist mit einem Befestigungsflansch 80 zur Verbindung mit dem Befestigungsort versehen, wobei der in den Fig. 3 und 4 dargestellte Befestigungsflansch 80 ein Langloch 82 aufweist, durch welches hindurch Befestigungsmittel geführt werden können, was in Fig. 3 durch einen Schraubbolzen 84 angedeutet ist.

In dem in Fig. 4 dargestellten Ausführungsbeispiel ist in einem Kreisbogen eine Mehrzahl von Löchern 74, 74a - 74d angeordnet. Durch diese Löcher 74, 74a - 74d ist es möglich, den Winkel des Halterarmes 62 zum Pflanzbehälter 12 bzw. zum Befestigungsort den örtlichen Gegebenheiten entsprechend einzustellen. Dazu wird der Halterarm 62 mit dem Loch 72 über den in Fig. 4 links dargestellten Bolzen 50 geschoben und über diesen Bolzen 50 so verdreht, bis der in Fig. 4 rechts dargestellte Bolzen 50 in das gewünschte Loch 74, 74a - 74d eingreifen kann. Die Bolzen 50, 52 bestehen gemäß den Fig. 3 und 4 aus Kunststoff und sind einstückig an die Seitenwandungen 20, 22 des Pflanzbehälters 12 angespritzt. Es können aber auch andere Arten von Bolzen 50, 52 verwendet werden, beispielsweise ist es möglich, die Bolzen 50, 52 mit einer oder mehreren Zungen an den Seitenwandungen 20, 22 des Pflanzbehälters 12 anzuformen, es können Schraubbolzen, Schnappriegelverschlüsse oder dergleichen verwendet werden.

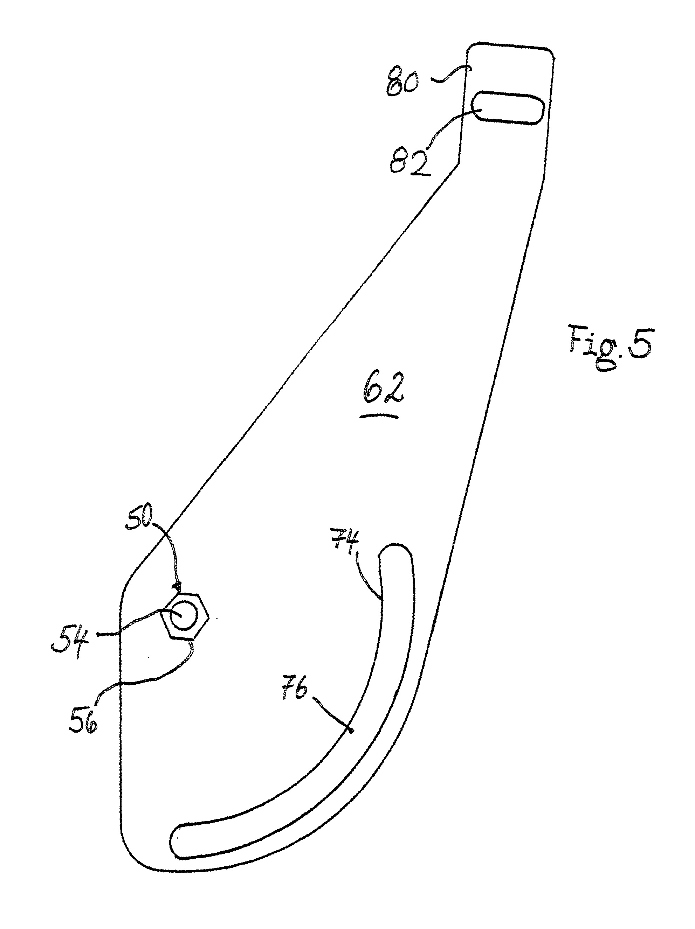

In Fig. 5 ist ein zweites Ausführungsbeispiel eines Halterarmes 62 dargestellt. Dieser in Fig. 5 dargestellte Halterarm unterscheidet sich von dem in Fig. 3 und 4 dargestellten Halterarm 62 dadurch, daß hier das Loch 74 als kurvenförmiges Langloch 76 ausgebildet ist. Dieses Langloch 76 dient der stufenlosen Winkelverstellung des Halterarmes 62, wobei dann der Halterarm 62 mit einem herkömmlichen Schraubbolzen 54 mit Mutter 56 mit dem Pflanzbehälter 12 verbunden wird. Ebenfalls kann ein zweiter Schraubbolzen 54 mit Mutter 56 durch das Loch 72 geführt werden, wobei das Loch 72 in Fig. 5 nicht sichtbar ist.

Der in Fig. 5 dargestellte Halterarm 62 weist ferner einen Befestigungsflansch 80 mit Langloch 82 auf, wobei der Befestigungsflansch 80 des Halterarmes 62 aus Fig. 5 nicht abgewinkelt ist.

Die in den Fig. 2 - 5 dargestellten Halterarme 62 sind Flachstücke aus V2A-Stahl, es können jedoch auch andere Materialien verwendet werden. Auch eine Kunststoffbeschichtung in einer der Pflanzvorrichtung 10 entsprechenden Farbe ist denkbar.

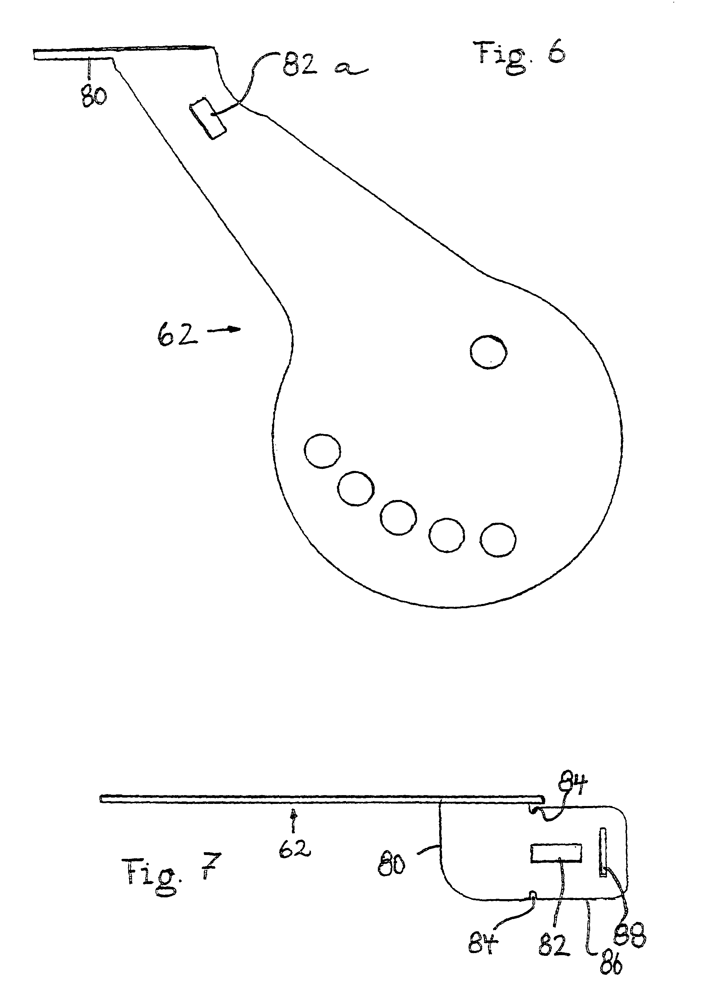

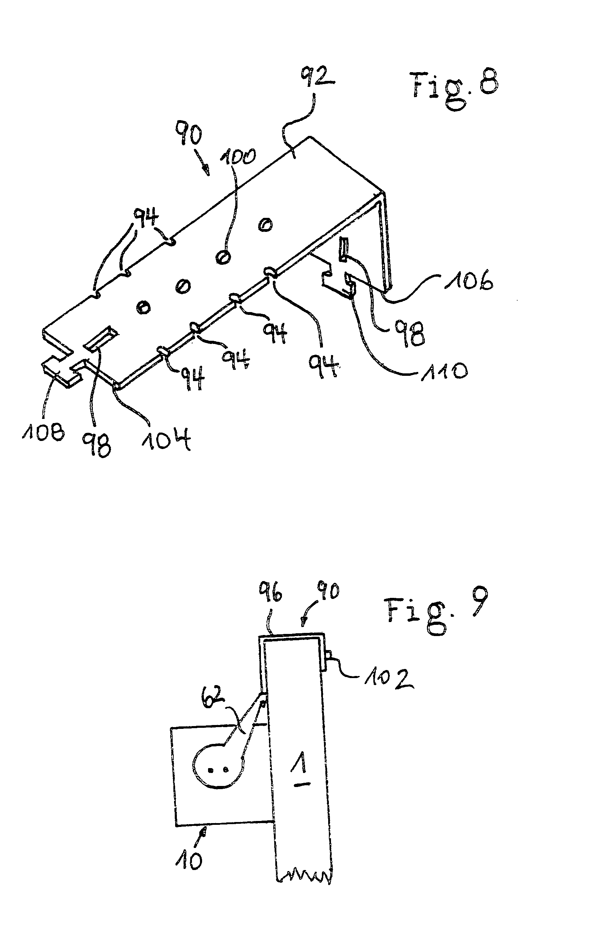

In den Figuren 6 und 7 ist ein drittes Ausführungsbeispiel eines Halterarmes 62 von der Seite und von oben dargestellt.

Der Halterarm 62 aus den Figuren 6 und 7 entspricht weitgehend dem in Fig. 4 dargestellten Halterarm 62; ähnlich wie dieser weist auch der Halterarm 62 gemäß den Figuren 6 und 7 einen abgewinkelten Befestigungsflansch 80 mit Langloch 82 auf. Zusätzlich ist der Befestigungsflansch 80 gemäß den Figuren 6 und 7 noch mit einer Sollknickstelle 84 versehen, durch welche ein vorderer Teilbereich 86 des Befestigungsflansches 80 rechtwinklig zum Befestigungsflansch 80 abgewinkelt werden kann. In diesem vorderen Teilbereich 86 ist in den Befestigungsflansch 80 noch ein Schlitz 88 eingebracht, welcher dazu dient, mit einer herkömmlichen, nicht näher dargestellten Schlauchschelle oder einem anderen Blechband verbunden zu werden, wobei dann die Schlauchschelle bzw. das Blechband beispielsweise an einen Handlauf mit rundem Querschnitt eines Balkongeländers verbunden werden kann.

Wie in Fig. 6 zu erkennen, ist der Halterarm 62 mit einem zusätzlichen Langloch 82a versehen, welches zur Aufnahme von bzw. zur Verbindung mit Haken, Ketten, Seilen oder Lochbändern zur senkrechten Abhängung der Pflanzvorrichtung 10 dient, oder durch welches der Halterarm 62 direkt an eine Wand oder dergleichen angeschraubt werden kann.

Das Langloch 82 des Befestigungsflansches 80 des Halterarmes 62 aus den Figuren 6 und 7 kann zur Verbindung mit einem in Fig. 8 dargestellten Haltersattelstück 90 verwendet werden. Dieses Haltersattelstück 90 ist ein Winkelstück 92, welches durch Sollknickstellen 94 zu einem U-Stück 96 abwinkelbar ist. Entsprechend der Tiefe des in Fig. 9 als Mauer 1 angedeuteten Befestigungsortes kann das Winkelstück 92 durch die Sollknickstellen 94 passend abgewinkelt und auf den Befestigungsort aufgesattelt werden.

Das in Fig. 8 dargestellte Winkelstück weist zwei Langlöcher 98 und Bohrungen 100 auf, welche zur Befestigung des Winkelstückes 92 am Befestigungsort dienen. Wie in Fig. 9 beispielhaft dargestellt, kann beispielsweise eine Schraube 102 durch das Langloch 98 geführt und an die Mauer 1 angeschraubt werden.

Das Winkelstück 92 ist an seinen Enden 104, 106 mit Knebeln 108, 110 versehen, welche durch das Langloch 82 des Befestigungsflansches 80 des Halterarmes 62 gemäß den Figuren 6 und 7 hindurchgeführt und verdreht werden können. Die Knebel 108, 110 können auch dazu benutzt werden, diese mit einem Lochband oder dergleichen zu verbinden. Das kann vorteilhaft sein, wenn bei Auflage des Haltersattelstückes 90 auf einen Handlauf eines Balkongeländers keine Möglichkeit besteht, das Haltersattelstück mit dem Handlauf zu verschrauben. Dann können die Knebel 108, 110 mit einem Lochband oder dergleichen verbunden werden, wodurch die gesamte Konstruktion den Handlauf umschließt.

## Patentansprüche

1. Pflanzvorrichtung (10) mit einem nach oben offenen Pflanzbehälter (12) mit einer Bodenwandung (14) und Seitenwandungen (16 - 22) und mit einem Einsatz zum Einsetzen in den Pflanzbehälter (12), wobei der Einsatz aus einem nach oben offenen Korb (30) zur Aufnahme einer Pflanzkultur besteht und wobei der Korb (30) eine Bodenwandung (32) und Seitenwandungen (36 - 42) aufweist, und wobei die Pflanzvorrichtung (10) eine Halterung (60) aufweist, welche mit einem Ende (64) an der Pflanzvorrichtung (10) und mit einem anderen Ende (66) an einem Befestigungsort anbringbar ist, **dadurch gekennzeichnet, daß** die Halterung (60) aus zwei an zwei sich gegenüberliegenden Seitenwandungen (20, 22) der Pflanzvorrichtung (10) anbringbaren Halterarmen (62) besteht, wobei jeder Halterarm (62) mit einem unteren Bereich (68) an einer Innenwandung (24; 26) einer Seitenwandung (20; 22) anbringbar ist, wobei der untere Bereich (68) des Halterarmes (62) wenigstens zwei Löcher (72, 74; 76) aufweist, in welche an der Innenwandung (24; 26) angebrachte Bolzen (50; 52) eingreifen, wobei der Halterarm (62) im Eingriffszustand mit den Bolzen (50; 52) lateral durch die Innenwandung (24, 26) der Seitenwandung (20, 22) des Pflanzbehälters (12) und durch eine Außenwandung (44; 46) einer Seitenwandung (40, 42) des Korbes (30) festgelegt ist, und daß ein oberer Bereich (70) des Halterarmes (62) den Pflanzbehälter (12) und den Korb (30) überragt und mit einem Befestigungsflansch (80) zur Befestigung am Befestigungsort versehen ist, wobei bei waagerechter Ausrichtung der Pflanzvorrichtung (10) der Winkel des Haltearmes (62) zum Pflanzbehälter (12) einstellbar ist.

2. Pflanzvorrichtung nach Anspruch 1, **dadurch gekennzeichnet, daß** die beiden Bolzen (50; 52) in einer Linie parallel zur Fläche der Bodenwandung (32) des Korbes (30) an der Seitenwandung (20; 22) des Pflanzbehälters (12) angeordnet sind.

3. Pflanzvorrichtung nach Anspruch 1 oder 2, **dadurch gekennzeichnet, daß** eine Mehrzahl von Löchern (74, 74a - 74d) im unteren Bereich (68) des Halterarmes (62) in einem Kreisbogen zueinander angeordnet sind, wobei ein Bolzen (50) in Eingriff mit jeweils einem Loch (74, 74a - 74d) des Kreisbogens bringbar ist, während ein zweiter Bolzen (50) in Eingriff mit einem sich außerhalb des Kreisbogens befindlichen Loch (72) bringbar ist, wobei der lineare Abstand zwischen jedem Loch (74, 74a - 74d) des Kreisbogens zu dem außerhalb des Kreisbogens angeordneten Loch (72) gleich ist.

4. Pflanzvorrichtung nach einem der Ansprüche 1 - 3, **dadurch gekennzeichnet, daß** der Halterarm (62) ein Flachstück ist, bei dem ein den Befestigungsflansch (80) bildendes oberes Ende abgewinkelt ist.

5. Pflanzvorrichtung nach Anspruch 4, **dadurch gekennzeichnet, daß** der Befestigungsflansch (80) wenigstens eine Sollknickstelle (84) zur weiteren Abwinklung wenigstens eines Teilbereichs (86) des Befestigungsflansches (80) aufweist.

6. Pflanzvorrichtung nach Anspruch 4 oder 5, **dadurch gekennzeichnet, daß** der Befestigungsflansch (80) mit einem Langloch (82) versehen ist.

7. Planzvorrichtung nach einem der Ansprüche 4 bis 6, **dadurch gekennzeichnet, daß** der Befestigungsflansch (80) mit einem Schlitz (88) versehen ist.

8. Pflanzvorrichtung nach einem der Ansprüche 1 - 7, **dadurch gekennzeichnet, daß** der Bolzen (50; 52) eine einstückig durch eine federnde Zunge mit der Seitenwandung (20; 22) des Pflanzbehälters (12) verbundene Klinke ist.

9. Pflanzvorrichtung nach einem der Ansprüche 1 - 8, **dadurch gekennzeichnet, daß** der Bolzen (50; 52) aus Kunststoff besteht und an die Seitenwandung (20; 22) angespritzt ist.

10. Pflanzvorrichtung nach einem der Ansprüche 1 - 7, **dadurch gekennzeichnet, daß** der Bolzen (50; 52) federnd an der Seitenwandung (20; 22) gelagert ist.

11. Pflanzvorrichtung nach einem der Ansprüche 1 - 7, **dadurch gekennzeichnet, daß** der Bolzen (50; 52) ein Schraubbolzen (54) ist.

12. Pflanzvorrichtung nach einem der Ansprüche 1, 2 und 4 - 9, **dadurch gekennzeichnet, daß** ein Loch (74) des Halterarms (62) ein kurvenförmig ausgebildetes Langloch (76) ist.

13. Pflanzvorrichtung nach einem der Ansprüche 1 bis 12, **dadurch gekennzeichnet, daß** der Halterarm (62) mit einem Haltersattelstück (90) verbindbar ist.

14. Pflanzvorrichtung nach Anspruch 13, **dadurch gekennzeichnet, daß** das Haltersattelstück 90 ein zu einem U-Stück (96) abwinkelbares Winkelstück (92) ist.

15. Pflanzvorrichtung nach Anspruch 14, **dadurch gekennzeichnet, daß** das Winkelstück (92) wenigstens eine Sollknickstelle (94) aufweist, durch welche das Winkelstück (92) zum U-Stück (96) abwinkelbar ist.

16. Pflanzvorrichtung nach Anspruch 14 oder 15, **dadurch gekennzeichnet, daß** das Winkelstück (92) an wenigstens einem Ende (104; 106) mit einem Knebel (108; 110) versehen ist, wobei der Knebel (108; 110) mit dem Befestigungsflansch (80) verbindbar ist.

## Claims

1. Planting device (10) with a top-open plant container (12) with a base wall (14) and side walls (16-22) and with an insert for inserting in the plant container (12), the insert comprising a top-open basket (30) for receiving a plant culture and in which the basket (30) has a base wall (32) and side walls (36-42) and in which the planting device (10) has a support (60), whose one end (64) can be applied to the planting device (10) and whose other end (66) can be applied to a fixing location, **characterized in that** the support (60) comprises two supporting arms (62) which can be applied to two facing side walls (20, 22) of the planting device (10), each supporting arm (62) being applicable with a lower area (68) to an inner wall (24, 26) of a side wall (20, 22), the lower area (68) of the supporting arm (62) having at least two holes (72, 74, 76) in which engage bolts (50, 52) applied to the inner wall (24, 26), said supporting arm (62), in the engagement state with the bolts (50, 52), is secured laterally through the inner wall (24, 26) of the side wall (20, 22) of the plant container (12) and by an outer wall (44, 46) of a side wall (40, 42) of the basket (30), and that an upper area (70) of the supporting arm (62) projects over the plant container (12) and the basket (30) and is provided with a fixing flange (80) for fixing to the fixing location, and in the case of a horizontal orientation of the planting device (10) it is possible to adjust the angle of the supporting arm (62) relative to the plant container (12).

2. Planting device according to claim 1, **characterized in that** the two bolts (50, 52) are located in a line parallel to the surface of the base wall (32) of the basket (30) on the side wall (20, 22) of the plant container (12).

3. Planting device according to claim 1 or 2, **characterized in that** a plurality of holes (74, 74a-74d) are arranged in a circular arc to one another in the lower area (68) of the supporting arm (62) and a bolt (50) can be engaged with in each case one hole (74, 74a-74d) of the circular arc, whilst a second bolt (50) can be engaged with a hole (72) located outside the circular arc, the linear spacing between each hole (74, 74a-74d) of the circular arc with respect to the hole (72) located outside the circular arc being identical.

4. Planting device according to one of the claims 1 to 3, **characterized in that** the supporting arm (62) is a flat piece, in which an upper end forming the fixing flange (80) is bent.

5. Planting device according to claim 4, **characterized in that** the fixing flange (80) has at least one predetermined bending point (84) for the further bending of at least one partial area (86) of the fixing flange (80).

6. Planting device according to claim 4 or 5, **characterized in that** the fixing flange (80) is provided with an elongated hole.

7. Planting device according to one of the claims 4 to 6, **characterized in that** the fixing flange (80) is provided with a slot (88).

8. Planting device according to one of the claims 1 to 7, **characterized in that** the bolt (50, 52) is a latch connected in one piece by a resilient tongue with the side wall (20, 22) of the plant container (12).

9. Planting device according to one of the claims 1 to 8, **characterized in that** the bolt (50, 52) is made from plastic and is injection moulded onto the side wall (20, 22).

10. Planting device according to one of the claims 1 to 7, **characterized in that** the bolt (50, 52) is resiliently mounted on the side wall (20, 22).

11. Planting device according to one of the claims 1 to 7, **characterized in that** the bolt (50, 52) is a threaded bolt (54).

12. Planting device according to one of the claims 1, 2 and 4 to 9, **characterized in that** a hole (74) of the supporting arm (62) is a curved elongated hole (76).

13. Planting device according to one of the claims 1 to 12, **characterized in that** the supporting arm (62) can be connected to a holder saddle piece (90).

14. Planting device according to claim 13, **characterized in that** the holder saddle piece (90) is an angle piece (92) which can be bent to form a U-piece (96).

15. Planting device according to claim 14, **characterized in that** the angle piece (92) has at least one predetermined bending point (94) through which the angle piece (92) can be bent to form the U-piece (96).

16. Planting device according to claim 14 or 15, **characterized in that** the angle piece (92) is provided at at least one end (104, 106) with a toggle (108, 110), which can be connected to the fixing flange (80).

## Revendications

1. Dispositif de plantation (10) comprenant un conteneur de plantation (12), ouvert vers le haut, avec un fond (14) et des parois latérales (16-22), ainsi qu'un insert, destiné à être inséré dans le conteneur de plantation (12), l'insért étant un panier (30) ouvert vers le haut, destiné à recevoir une culture végétale, le panier (30) présentant un fond (32) et des parois latérales (36 à 42) et le dispositif de plantation (10) étant équipé d'un support (60), dont une des extrémités (64) peut être fixée sur le dispositif de plantation (10) et dont l'autre extrémité (66) peut être fixée à un endroit de fixation, **caractérisé en ce que** le support (60) est constitué de deux bras de fixation (62) pouvant être montés sur deux parois latérales opposées (20, 22) du dispositif de plantation (10), chaque bras de fixation (62) pouvant être monté avec une partie inférieure (68) sur une face interne (24, 26) d'une paroi latérale (20, 22), que la partie inférieure (68) du bras de fixation (62) présente au moins deux trous (72, 74 ; 76), dans lesquels s'engagent des chevilles (50, 52); le bras de fixation (62) étant bloqué latéralement, en état d'engagement avec les chevilles (50,52), par la face interne (24, 26) de la paroi latérale (20 ,22) du conteneur de plantation (12) et par une face externe (44,46) d'une paroi latérale (40, 42) du panier (30) et qu'une partie supérieure (70) du bras de fixation (62) fait saillie au-dessus du conteneur de plantation (12) et du panier (30) et qu'elle est équipée d'une bride de fixation (80) pour la fixation à l'endroit de fixation, l'angle entre le bras de fixation (62) et le conteneur de plantation (12) étant réglable, à orientation horizontale du dispositif de plantation (10).

2. Dispositif de plantation suivant la revendication 1, **caractérisé en ce que** les deux chevilles (50, 52) sont disposées sur une ligne, parallèlement à la surface du fond (32) du panier (30), sur la paroi latérale (20, 22) du conteneur de plantation (12).

3. Dispositif de plantation suivant la revendication 1 pu 2, **caractérisé en ce que** plusieurs trous (74, 74a à 74d) sont disposés dans la partie inférieure (68) du bras de fixation (62) de manière à former un are de cercle les uns par rapport aux autres, une cheville (50) pouvant s'engager dans un trou respectivement (74, 74a - 74d) de l'arc de cercle, alors qu'une seconde cheville (50) peut s'engager dans un trou (72) se trouvant à l'extérieur de l'arc de cercle, la distance linéaire entre chaque trou (74, 74a à 74d) de l'arc de cercle par rapport au trou (72) disposé à l'extérieur de l'arc de cercle étant identique.

4. Dispositif de plantation suivant une des revendications 1 à 3, **caractérisé en ce que** le bras de fixation (62) est une pièce plate, dont l'extrémité supérieure, qui forme la bride de fixation (80), est coudée.

5. Dispositif de plantation suivant la revendication 4, **caractérisé en ce que** la bride de fixation (80) présente au moins un point destiné à la rupture (84) pour couder davantage une partie partielle au moins (86) de la bride de fixation (80).

6. Dispositif de plantation suivant la revendication 4 ou 5, **caractérisé en ce que** la bride de fixation (80) est pourvue d'un trou oblong (82).

7. Dispositif de plantation suivant une des revendications 4 à 6, **caractérisé en ce que** la bride de fixation (80) est pourvue d'une fente (88).

8. Dispositif de plantation suivant une des revendications 1 à 7, **caractérisé en ce que** la cheville (50, 52) est un doigt relié par l'intermédiaire d'une lame élastique à la paroi (20, 22), de manière à ne former qu'une seule pièce avec celle-ci.

9. Dispositif de plantation suivant une des revendications 1 à 8, **caractérisé en ce que** la cheville (50, 52) est en matière artificielle et moulée par injection sur la paroi latérale (20, 22).

10. Dispositif de plantation suivant une des revendications 1 à 7, **caractérisé en ce que** la cheville (50, 52) est logée élastique sur la paroi latérale (20, 22).

11. Dispositif de plantation suivant une des revendications 1 à 7, **caractérisé en ce que** la cheville (50, 52) est un boulon fileté (54).

12. Dispositif de plantation suivant une des revendications 1, 2 et 4 à 9, **caractérisé en ce qu**'un trou (74) du bras de fixation (62) est un trou oblong (76) conçu en forme de courbe.

13. Dispositif de plantation suivant une des revendications 1 à 12, **caractérisé en ce que** le bras de fixation (62) peut être relié à un fer plat porteur (90).

14. Dispositif de plantation suivant la revendication 13, **caractérisé en ce que** le fer plat porteur 90 est une pièce coudée (92) pouvant être coudée de manière à former un U (96).

15. Dispositif de plantation suivant la revendication 14, **caractérisé en ce que** la pièce coudée (92) présente au moins un point destiné à la rupture (94), grâce auquel la pièce coudée (92) peut être coudée de manière à former un U (96).

16. Dispositif de plantation suivant la revendication 14 ou 15, **caractérise en ce que** la pièce coudée (92) est pourvue à une extrémité (104, 106) au moins d'un garrot (108, 110), le garrot (108, 110) pouvant être relié à la bride de fixation (80).
